# DEMANDE DE BREVET EUROPEEN

(11) **EP 1 538 778 A1**
(43) Date de publication de la demande: **08.06.2005**
(21) Numéro de dépôt: 03293047.1
(22) Date de dépôt: 05.12.2003
(51) Int. Cl.: H04L 12/26, G06F 11/36

(54) **Système de génération automatique de tests pour valider un appareil de télécommunication**

(71) Demandeur: Andrea Informatique SARL, 75014 Paris (FR)
(72) Inventeur: Camacho, Juan, 75014 Paris (FR); Camacho Mario, 75014 Paris (FR)
(74) Mandataire: Pontet, Bernard

(57) **Abrégé**

L'invention concerne un serveur de test pour tester un appareil de télécommunication. Ce serveur comprend :
- une application compilée pour élaborer au moins une suite exécutable de tests à partir de données standard, et
- une application en langage interprété pour transmettre ladite suite exécutable de tests vers l'appareil de télécommunication et recevoir des résultats en provenance de cet appareil de télécommunication, cette application en langage interprété étant configurable avec des données spécifiques dudit appareil de télécommunication de façon à adapter le serveur de test au mode de communication spécifique dudit appareil de télécommunication.

L'application compilée comprend un éditeur graphique en langage MSC en association avec un éditeur en langage ASN.1.

## Description

La présente invention se rapporte à un système de génération automatique de tests pour valider un appareil de télécommunication. Elle trouve une application particulièrement intéressante dans le domaine des réseaux intelligents ou réseaux de type GSM ou IP dans lesquels on désire valider ou vérifier le fonctionnement et/ou le paramétrage d'un commutateur par exemple.

L'environnement d'un système de télécommunication fait intervenir de nombreuses ressources hétérogènes accessibles aux moyens de différentes interfaces externes. Pour un commutateur par exemple, ces interfaces peuvent comprendre des lignes téléphoniques ou des canaux sémaphores.

La réalisation de tests d'un appareil de télécommunication peut s'avérer nécessaire dans différents moments de la vie d'un système de télécommunication, ces tests peuvent consister en :
- une mise en conformité des protocoles,
- des tests d'intégration d'un équipement par un constructeur,
- des tests de validation et d'acceptation à la fin d'un projet, ou
- des tests d'intégration de réseaux pour un opérateur de télécommunication.

D'une façon générale, les tests réalisés sont basés sur une simulation environnementale autour d'un appareil de télécommunication ou plus généralement d'un système-sous-test "SUT" ("SYSTEM UNDER TEST" en langue anglaise). Le but de ces tests est de vérifier que le SUT satisfait aux spécifications fonctionnelles ou que son comportement correspond à ce qui était prévu.

Habituellement, les tests sont organisés de la manière suivante:
- définition d'un plan de tests,
- création de tests fonctionnels sous forme de scénarios simulant les unités externes du système devant être validé,
- exécution de ces tests sur l'appareil de télécommunication (SUT), par simulation des équipements environnant l'appareil de télécommunication,
- analyse des résultats en comparaison avec le comportement de l'appareil de télécommunication selon des spécifications techniques et production d'un bilan de test.

Très souvent, sinon toujours, les tests d'appareils de télécommunication se font à l'aide des simulateurs. Les simulateurs sont des matériels capables de représenter le contexte autour de l'appareil à tester, toutefois, ces simulateurs et les protocoles de télécommunication sont très complexes et hétérogènes. La maîtrise du test via ces équipements de simulation reste difficile et nécessite une certaine période d'apprentissage, en effet, les langages de programmation de ces simulateurs sont généralement précaires. En plus, si plusieurs tests de bon fonctionnement doivent être passés et des vérifications de non régression doivent être réalisées, le temps total de test peut représenter une partie importante dans le cycle de vie d'un produit (spécification, réalisation et test).

La présente invention a pour but la réalisation d'un système de tests conviviale et simple à mettre en oeuvre permettant de limiter les coûts et les délais d'exécution des tests, et d'en améliorer la qualité. L'invention vise un gain de temps.

Un autre but de la présente invention est de réaliser un système modulable capable d'évoluer.

On atteint au moins l'un des buts précités avec un serveur de test pour tester un appareil de télécommunication. Selon l'invention, ce serveur de test comprend :
- une application compilée pour élaborer au moins une suite exécutable de tests à partir de données standard, telles que des données relatives à des protocoles de communication standards et des données normalisées de spécification de tests, et
- une application en langage interprété pour transmettre ladite suite exécutable de tests vers l'appareil de télécommunication et recevoir des résultats en provenance de cet appareil de télécommunication, cette application en langage interprété étant configurable avec des données spécifiques dudit appareil de télécommunication de façon à adapter le serveur de test au mode de communication spécifique dudit appareil de télécommunication.

Le serveur de test est ainsi constitué d'une partie binaire (produit d'une compilation) et d'une partie interprétée.

Les serveurs de l'art antérieur comportent uniquement des applications en langage binaire tel que le C ou le C + +. Généralement, selon l'art antérieur, lorsqu'un utilisateur désire connecter un serveur de test à un appareil de télécommunication spécifique, la société ayant élaboré le programme en C + + doit intervenir pour dé-compiler le programme, modifier le programme, puis recompiler le programme ainsi adapté. Avec le système selon l'invention, l'utilisateur peut lui-même adapter le serveur de test car les éléments configurables sont contenus dans la partie interprétée non compilée. Il est communément admis que l'utilisation d'un langage interprété peut être un inconvénient car le code source n'est pas protégé. La présente invention va à l'encontre de ce préjugé dans le sens qu'en utilisant un tel langage pour une partie configurable du programme global, l'utilisateur peut réaliser ses propres réglages sans forcément faire constamment appel au concepteur du serveur de test.

La présente invention a pour avantage de permettre l'élaboration des scénarios de tests au moyen d'un éditeur structurel graphique évolué tel que par exemple un éditeur MSC utilisant le langage MSC ("Message Sequence Chart"). L'éditeur MSC est graphique, structurel, contrairement à un éditeur en langage TTCN ("Testing and Test Control Notation" en langue anglaise) par exemple, et permet sous sa forme graphique une représentation intuitive des équipements fonctionnant dans des systèmes distribués. Il met particulièrement l'accent sur les messages échangés entre équipements. Ainsi, l'édition du plan de test est simplifiée par cet outil MSC d'aide à la saisie. On peut également envisager l'utilisation d'un éditeur graphique élaboré à partir d'un autre langage tel que par exemple l'UML.

Les messages et les fichiers de configuration sont introduits au moyen d'un éditeur graphique arborescent en langage ASN.1 ("Abstract Syntax Notation One"). Plusieurs fonctionnalités permettent de valoriser aisément les messages et les fichiers de configuration suivant la syntaxe définie dans les protocoles et les librairies.

Une suite exécutable de test (ETS, "executable test suite", en langue anglaise) correspond à l'association d'une suite abstraite de test (ATS "abstract test suite", en langue anglaise) et d'une sélection de messages et de fichiers de configuration. Une suite abstraite de test ATS est une suite de scénarios multi protocoles constituant un test complet. Le serveur de test comprend un autre éditeur graphique arborescent appelé éditeur de projets et de suites de test et permettant la définition de projets de validation suivant le plan de test de l'appareil de télécommunication. Cet éditeur est alimenté par les scénarios de test provenant de l'éditeur MSC.

Dans l'arbre de données internes, il est possible de définir des "NOTES". Une NOTE est un ensemble de données sans appartenance aux messages des protocoles mais permettant d'associer des informations de type PICS et PIXIT mais aussi tout type d'information complémentaire pour mieux définir ce qu'on souhaite générer ou tester.

Les exemples suivants sont des problèmes résolus à l'aide de NOTES :
- Les informations PICS (Protocol Implementation Conformance Standard).
- Les informations PIXIT (Protocol Implementation eXtra Information) et plus particulièrement :
   - Dire qu'une partie optionnelle d'un message ne doit pas être encodée et par conséquent, ne doit pas être envoyée à l'appareil de télécommunication.
   - Définir des trames de données erronées non conformes aux protocoles pour tester les cas d'erreur.
   - Dire que des parties de l'arbre de données doivent être vérifiées ou non suivant une fonction spécifique (intervalle ou liste de valeurs, expression régulière, etc).
   - Définir des listes de valeurs à la génération là où le protocole permet une seule valeur. L'objet de ce point est de pouvoir boucler et obtenir des valeurs différentes (par exemple : numéros de téléphone ou numéros de circuit de connexion).

Ainsi, la présente invention présente des éditeurs graphiques compilés très ergonomiques associés à une application en langage interprété facilement modifiable pour adapter le serveur de test aux caractéristiques spécifiques de communication de l'appareil de télécommunication. L'application interprétée réalise une encapsulation des données élaborées par l'application compilée.

Avantageusement, l'éditeur structurel graphique MSC est associé à un éditeur graphique au format ASN.1, ce dernier ayant pour fonction de générer des fichiers constitutifs d'une suite exécutable de tests à partir de données provenant de l'éditeur structurel graphique et de données relatives à des protocoles standards définis dans une plateforme de test.

La présente invention combine donc une édition (MSC) graphique structurel orienté télécommunication pour la création de scénarios avec une édition (ASN.1) graphique arborescent pour la création de messages et des configurations et enfin une édition graphique arborescente pour la création de projets et de suites de test. Un éditeur est dit "orienté télécommunication" lorsqu'il comprend des caractéristiques telles qu'éléments du réseau, envoi et réception de messages, traitement de séquences en parallèle, traitement de séquences alternatives, boucles, points de synchronisation et temporisations par exemple.

La plate-forme de tests peut être constituée d'une pluralité de modules de protocoles, chaque module de protocole comprenant au moins un protocole décrit sous le format ASN.1, une librairie et une première pile d'encodage et décodage pour produire des codes compréhensibles par l'appareil de télécommunication.

Avantageusement, les piles d'encodage et décodage sont définies en langage interprété.

Une pile d'encodage et de décodage est un ensemble de règles. Dans la norme d'un protocole, il est décrit comment un message doit se coder avant de l'envoyer à l'équipement cible (ou se décoder quand il est reçu). Ces règles sont une partie du protocole et par conséquent de la plate-forme de test.

Selon une caractéristique avantageuse de l'invention, l'application en langage interprété comprend une plate-forme d'intégration constituée d'une pluralité de modules d'intégration, chaque module d'intégration comprenant au moins une procédure d'initialisation, une librairie et une seconde pile d'encodage et décodage pour produire des codes spécifiques au mode de communication dudit appareil de télécommunication.

Chaque module d'intégration permet d'adapter les données de la suite exécutable de tests (scénarios écrits en langage MSC ; messages et fichiers de configuration au format ASN.1) aux spécificités de chaque appareil de télécommunication. En effet, les scénarios (MSC), messages et configurations (ASN.1) sont des données communes réutilisables associés aux protocoles standards (par exemple : TCAP, MAP, ISUP, INAP, H248, MGCP, SIP-T, BICC, etc) et qui sont complètement indépendants de l'appareil de télécommunication.

Ainsi, avec les mêmes données utilisateur (MSC et ASN.1) le serveur de test peut se connecter à des appareils de télécommunication complètement différents. Ceci est un des points clés du système car il est possible « d'adapter » le générique au spécifique à moindre coût.

Selon l'invention, l'application en langage interprété comprend un module d'exécution et d'interprétation de résultats permettant, par sa gestion, la génération de codes de commandes qui seront envoyées à l'appareil de télécommunication, via la plate-forme d'intégration, pour la réalisation du test avec production d'un bilan complet.

Le module d'exécution et d'interprétation de résultats est apte à :
- recevoir les fichiers constitutifs de la dite suite exécutable de test,
- gérer ladite suite exécutable de tests en utilisant ladite première pile d'encodage et décodage, et
- transmettre en temps réel ladite suite exécutable de tests vers l'appareil de télécommunication via la plate-forme d'intégration (seconde pile d'encodage et décodage).

Avantageusement, le module d'exécution et d'interprétation de résultats comprend des moyens pour recevoir en temps réel lors d'une exécution de test des résultats provenant de l'appareil de télécommunication via la plate-forme d'intégration, et générer des messages d'erreurs qui peuvent être visualisées dans les fiches de l'éditeur structurel graphique.

Plus précisément, ces erreurs sont directement notifiées dans la fiche de test MSC concernée. Il se crée alors une interaction à très haut niveau avec l'utilisateur, l'interaction est plus intuitive.

En fait, en même temps que le bilan se construit une liste d'erreurs est présentée à l'utilisateur, il est alors possible de les consulter graphiquement. En effet, depuis la liste d'erreurs par double clic, le scénario MSC concerné est affiché et le message en erreur est présenté coloré en rouge, puis par double clic sur le message, sa définition est affichée avec l'élément incriminé sélectionné (éditeur graphique arborescent). Ainsi l'utilisateur a la possibilité d'analyser graphiquement et en temps réel les erreurs ou les analyser ultérieurement hors du système à l'aide du serveur WEB.

L'application en langage interprété comprend par ailleurs un module de contrôle de l'exécution apte à interpréter en temps réel des informations sur le déroulement de test. Ces informations sont créées et éditées à l'aide de l'éditeur ASN.1.

Le serveur de test peut ainsi créer des simulations de charge. En effet, le module de contrôle de l'exécution permet de définir des simulations pour réaliser plusieurs fois la même exécution du test avec des configurations différentes, de définir le niveau de traces dans le bilan de test mais aussi de générer simultanément plusieurs exécutions de test. Par exemple, simulation de plusieurs appels téléphoniques en même temps sur le même appareil de télécommunication.

En outre, le module d'exécution et d'interprétation de résultats peut comprendre des moyens pour générer un fichier de suite exécutable de test hors ligne. On peut alors réaliser un test hors-ligne par transmission de code source. Dans ce cas précis, la pile d'encodage et de décodage est remplacée par l'ensemble de fonctions permettant la génération de code source pour utilisation ultérieure. Dans le test hors ligne, une intervention manuelle est nécessaire pour « charger » le code source généré, directement dans l'appareil de télécommunication ou dans un simulateur directement connecté.

En effet, le système selon l'invention peut comprendre un simulateur interposé entre le serveur de test et l'appareil de télécommunication. Les codes générés par le serveur de test sont interprétés par ce simulateur qui se charge de commander l'appareil de télécommunication. Ce cas peut être présent dans les deux modes : en-ligne et hors-ligne. Lors de la réalisation d'un module d'intégration, la présence ou l'absence d'un simulateur est prise en compte.

La plate-forme de test peut comprendre des moyens pour générer simultanément différents codes de commande selon différents protocoles. Le système selon l'invention est ainsi multi-protocoles. Plusieurs protocoles peuvent interagir simultanément pendant l'exécution du test.

Grâce au langage MSC il est possible de définir toutes les instances des éléments connectés à l'appareil de télécommunication, pour chaque élément, un protocole de communication est défini. En outre, le système selon l'invention est capable d'interpréter le scénario et d'échanger, avec l'appareil de télécommunication, des messages de plusieurs protocoles simultanément en respectant la séquence définie dans le scénario MSC et tout ceci pour chaque instance.

Selon l'invention, l'application en langage interprété comprend un serveur Web pour la gestion des résultats ou bilans issus de tests. Ces résultats sont transmis par le module d'exécution et d'interprétation de résultats.

En d'autres termes, à chaque test, le bilan est envoyé dans le serveur WEB pour analyse immédiat ou ultérieur. Dans le serveur WEB, un historique de bilans est géré pour permettre des comparaisons dans le temps et vérifications de non régression. Chaque bilan décrit le test, les éléments qui interviennent, la configuration, les mises en garde, les erreurs, etc.

Plus précisément, la suite exécutable de tests ETS (« Executable Test Suite » en langue anglaise) peut comprendre au moins:
- un fichier de test de type ATS ("Abstract Test Suite", en langue anglaise) élaboré depuis l'éditeur de projets et de suites de test;
- un fichier d'édition de message, un fichier de configuration de protocole et un fichier de configuration de messages;
- un fichier pour configurer, lors de l'exécution de tests, la plateforme d'intégration, ce fichier est édité par l'éditeur ASN.1 à partir de données préalablement obtenues depuis la plate-forme d'intégration;
- un fichier pour configurer, lors de l'exécution de tests, le module d'exécution, ce fichier est édité par l'éditeur ASN.1 à partir de données préalablement obtenues depuis le module de contrôle de l'exécution.

Ainsi l'éditeur ASN.1 manipule les données relatives aux protocoles, configuration et messages, contrairement à d'autres éditeurs tels que par exemple l'éditeur en langage TTCN qui est peu conviviale, non graphique et difficilement manipulable.

La présente invention propose un langage interprété configurable rendant le serveur de test "Plug&Play".

A titre d'exemple, le langage interprété est un langage de type PERL ("Practical Extraction and Reporting Language").

De préférence, le serveur de test comprend une application de type API (interface de programme d'application) faisant le lien entre l'application compilée et l'application en langage interprété. Cette application de type API comprend des moyens pour intégrer des modules extérieurs spécifiques à chaque utilisateur. Le serveur de test peut donc s'adapter à des besoins spécifiques des utilisateurs.

Ces modules peuvent être de deux types : soit ils sont des applications existantes que le client souhaite intégrer dans le système (compilateurs, générateur de rapports, etc) ; soit il s'agit d'un besoin client pour lequel il faut un développement. Ce développement, en règle générale, est une fonctionnalité uniquement utilisée par ce client, par exemple : migration de données existantes, analyseurs sémantiques, etc. et pour laquelle une utilisation générale n'est pas envisageable.

Suivant un autre aspect de l'invention, il est proposé un procédé pour tester un appareil de télécommunication au moyen d'un serveur de test. Selon l'invention, on élabore une suite exécutable de tests au moyen d'une application compilée, on adapte, par encapsulation par exemple, la suite exécutable de tests au mode de communication dudit appareil de télécommunication au moyen d'une application en langage interprété en combinaison avec ladite application compilée au sein du serveur de test.

Pour l'élaboration de la suite exécutable de test, les éditeurs MSC et ASN.1 utilisent des protocoles préalablement décrits dans le serveur sous le format ASN.1. Ceci permet au serveur de test d'apprendre tout nouveau protocole : il est aisé de décrire les protocoles en langage ASN.1, le serveur est ainsi évolutif.

Lors de la définition des protocoles, on réalise des piles d'encodage et décodage en langage interprété.

Lors de l'exécution de tests, les erreurs sont visualisées en temps réel dans une fiche de l'éditeur MSC. Avec l'éditeur ASN.1, on peut déterminer à quels éléments les erreurs sont associées. La présente invention autorise donc une visualisation graphique des erreurs et la possibilité de correction immédiate car on accède à l'élément concerné directement avec l'éditeur ASN.1. Donc correction, exécution et vérification : le cycle est simple et immédiat.

D'autres avantages et caractéristiques de l'invention apparaîtront à l'examen de la description détaillée d'un mode de mise en oeuvre nullement limitatif, et des dessins annexés sur lesquels :
- La figure 1 représente le champ d'action du serveur selon l'invention dans un réseau (plusieurs éléments et plusieurs protocoles) où l'un de ces éléments doit être testé (appareil de télécommunication).
- La figure 2 est un schéma simplifié illustrant un serveur de tests selon l'invention relié à un appareil de télécommunication;
- La figure 3 est un schéma simplifié illustrant le serveur de tests selon l'invention intégré dans un réseau de communication;
- La figure 4 est une vue éclatée des différentes fonctions du serveur de tests;
- Les figures 5a et 5b sont deux vues d'écran illustrant un exemple d'un scénario de test produit par l'éditeur MSC.
- Les figures 6a et 6b sont deux vues d'écran illustrant un exemple d'un message édité avec l'éditeur ASN.1.
- La figure 7 est un schéma illustrant différentes façons de paramétrer le serveur de tests en ce qui concerne la partie protocole.
- La figure 8 est un schéma illustrant une librairie et un fichier de configuration selon l'invention; et
- La figure 9 est une vue partielle de l'interface graphique proposée par le serveur de tests.

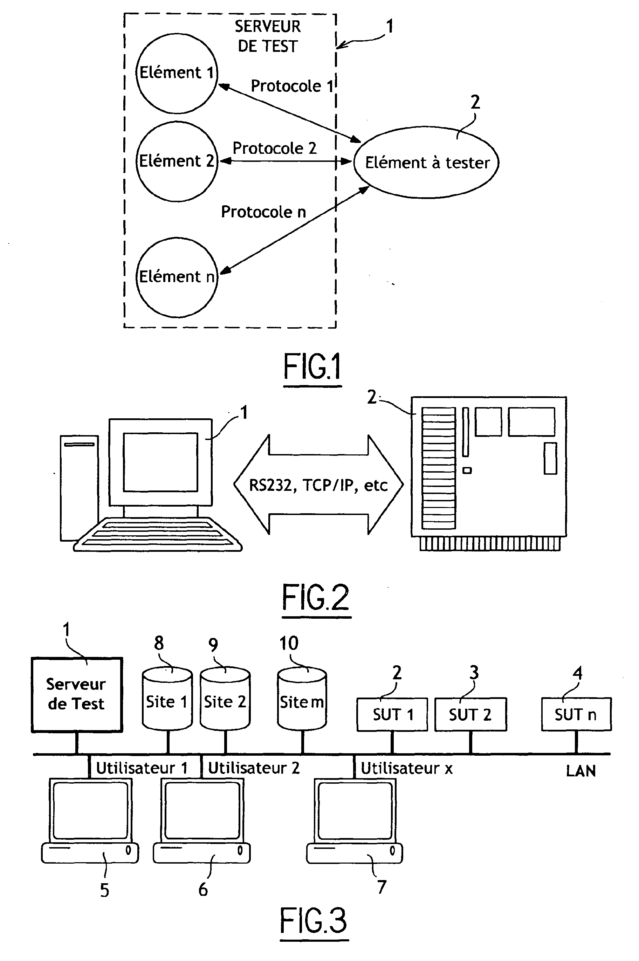

La figure 1 montre le besoin de test dans un système de télécommunication. Les éléments du système sont testés l'un après l'autre. Une fois que l'élément à tester est sélectionné, le rôle du serveur de test et de remplacer le contexte autour de cet élément en réalisant des échanges d'information simulés suite à un plan de test.

Sur la figure 2 est représenté un serveur de test (simulation du contexte de test) 1 relié à un appareil de télécommunication (élément à tester) 2 tel que par exemple un autocommutateur pour lequel on désire réaliser des tests pour valider son fonctionnement. Le serveur de test a pour but de générer un ensemble de codes de commande vers l'appareil de télécommunication et d'interpréter les réponses de cet appareil de télécommunication pour établir un bilan de test. Les codes de commande générés par le serveur de test sont tels que l'appareil de télécommunication testé a l'impression d'être intégré dans son environnement de fonctionnement normal. La connexion, entre le serveur de test et l'appareil de télécommunication peut être de tout type, par exemple, connexion directe RS232, TCP/IP, etc.

Sur la figure 3 on retrouve le serveur de test 1 et l'appareil de télécommunication 2 disposés dans un réseau TCP/IP comprenant plusieurs autres appareils de télécommunication 3 et 4, plusieurs terminaux 5 à 7 et des sites 8 à 10. Chaque terminal 5, 6, ou 7 correspond à un utilisateur donné. Les sites 8, 9 et 10 sont des moyens de stockage permettant de gérer des données relatives à un utilisateur ou à une équipe de validation (données abstraites et spécifiques). Lors de l'activation du serveur de test 1, un utilisateur doit sélectionner un des sites 8 à 10 à utiliser. Ainsi, un utilisateur 5, 6 ou 7 peut accéder à différents sites 8 à 10, et plusieurs utilisateurs peuvent accéder à un même site.

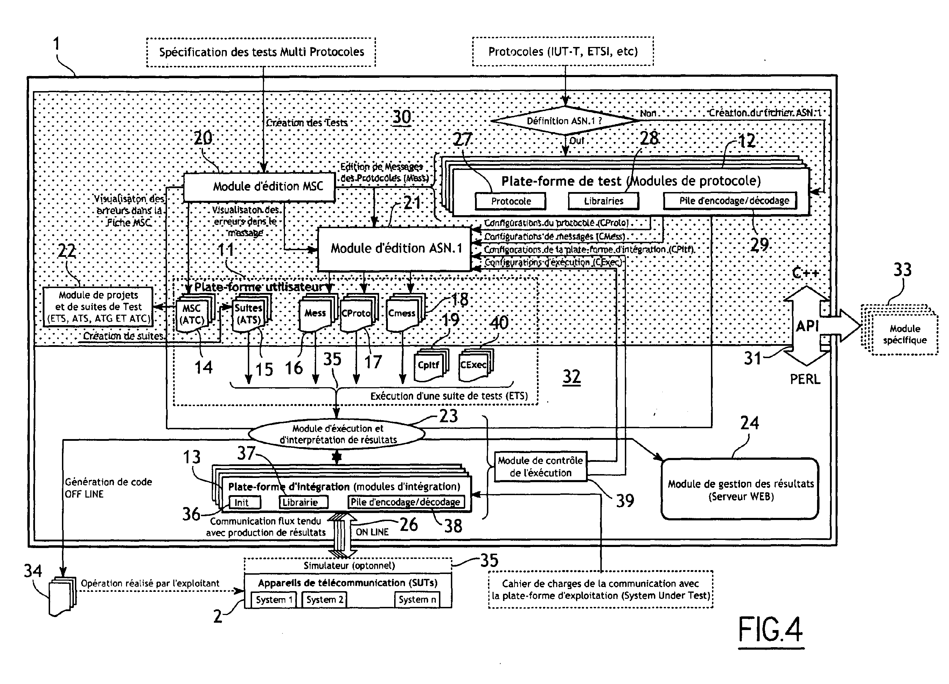

Sur la figure 4 sont représentées les composantes du serveur de test 1. On distingue une plate-forme utilisateur 11, une plate-forme de test (modules de protocole) 12, la plate-forme d'intégration (modules d'intégration) 13, le module d'édition MSC 20, le module d'édition ASN.1 21, le module d'édition de projets et de suites de test 22, le module d'exécution et d'interprétation des résultats 23 , le module de gestion de résultats de test (serveur WEB) 24 et le module de contrôle de l'exécution 39.

La plate-forme utilisateur 11 est l'ensemble de données utilisateur, à savoir : les scénarios de test MSC 14, les suites de test ATS 15, les messages 16, les configurations des protocoles 17, les configurations des messages 18, les configurations de la plate-forme d'intégration 19 et les configurations de contrôle de l'exécution 40. La création et édition de données se fait, à l'aide du module d'édition MSC 20 pour les scénarios de test, à l'aide du module de projets et de suites de test 22 pour les suites ATS et projets et à l'aide du module d'édition ASN.1 21 pour les messages et configurations.

La plate-forme de test 12 est constituée des modules de protocole. Chaque module de protocole permet de prendre en compte, le protocole 27 défini sous le format ASN.1 (format standard de définition de protocoles, structure des messages, contraintes, ...), les librairies 28 (variables permettant la factorisation dans la valorisation de messages) et la pile d'encodage et décodage 29 pour produire de codes compréhensibles par l'appareil de télécommunication 2.

Dans chaque module de protocole, les librairies 28 définissent la structure et les types des variables utilisées pour valoriser des messages. Une variable représente une valeur couramment utilisée, elle est définie une fois et utilisée à plusieurs endroits dans les messages. A partir d'une librairie, plusieurs fichiers de configuration peuvent être définis 18. Lorsqu'un nouveau fichier de configuration est créé, il est élaboré avec les valeurs par défaut de la librairie. L'utilisateur peut alors changer ces valeurs selon des exigences propres.

Dans certains protocoles, il est nécessaire de définir un ensemble de paramètres en dehors de messages, par exemple : séparateurs, mots clés, etc. Ces paramètres sont définis, le cas échéant, à l'aide des fichiers de configuration du protocole 17.

La pile d'encodage et décodage 29 est définie en langage interprété. La plate-forme de test procure ainsi une totale flexibilité dans l'évolution des protocoles.

La plate-forme d'intégration 13 est constituée de modules d'intégration, chaque module d'intégration est constitué de la procédure d'initialisation 36, de la librairie associée 37 (configuration des paramètres de l'appareil de télécommunication) et de la pile d'encodage et de décodage 38 (pile définissant la communication spécifique avec l'appareil de télécommunication : RS232, TCP/IP, etc).

Dans le module d'intégration, la librairie 37 définit la structure et les types des variables utilisées. A partir de la librairie, plusieurs fichiers de configuration 19 peuvent être définis. Lorsqu'un nouveau fichier de configuration est créé, il est élaboré avec les valeurs par défaut de la librairie. L'utilisateur peut alors changer ces valeurs selon des exigences propres.

Ces valeurs représentent le contexte de l'appareil de télécommunication, par exemple, l'adresse IP, le port IP, les canaux de communication, etc.

La pile d'encodage et décodage 38 est définie en langage interprété, ceci procure une totale flexibilité dans la modification, ou l'éventuel changement, de l'appareil de télécommunication 2.

Le module d'édition MSC 20 permet la création graphique des scénarios de test. Les scénarios sont le point de départ dans la création de suites de test.

Le module d'édition ASN.1 21 permet l'édition de messages et des configurations. Cet éditeur est graphique et arborescent.

Le module de création de projet et de suites de test 22 permet la définition de projets de validation suivant le plan de test de l'équipement.

Les suites de test sont exécutées grâce à une ETS 35 ("executable test suite", en langue anglaise). Une ETS est l'association d'une ATS ("abstract test suite", en langue anglaise) et une sélection de messages et de tous les fichiers de configuration.

Une ATS est la suite de scénarios multi protocoles qui constituent un test complet.

Par conséquent, l'exécution d'une ETS 35 implique l'utilisation des plates-formes utilisateur 11 et de test 12 pour générer des codes de commandes vers des appareils de télécommunication hétérogènes à travers la plate-forme d'intégration 13.

Un test peut s'adresser à plusieurs appareils de télécommunication au même temps mais, pour des raisons de terminologie, l'ensemble de ces appareils est appelé SUT (System Under Test en langue anglaise) ou simplement appareil de télécommunication.

Comme indiqué dans la figure 4, la communication entre le serveur de test 1 et l'appareil de télécommunication 2 peut être de type flux-tendu, c'est-à-dire une génération de code en-ligne 26 ou alors de type hors-ligne 34.

Dans la communication en ligne 26, les codes sont générés et transmis en temps réel, c'est-à-dire, que le scénario de test est respecté dans sa séquence et dans le temps dans sa communication avec l'appareil de télécommunication (décisions, synchronisations, boucles, etc). Les réponses de l'appareil de télécommunication sont décodées puis analysées et comparées à une référence définie par l'utilisateur (message en réception). Avec cette approche, il est alors possible d'identifier les possibles anomalies dans l'exécution du test.

Dans la communication hors-line, l'exécution de l'ETS 35 produit un programme (liste de commandes) 34. Ce programme est généré dans le langage connu du simulateur ou de l'appareil de télécommunication (normalement ce langage est de bas niveau). Le programme généré doit être intégré puis exécuté par le testeur en personne, en effet, dans ce type de connexion aucune communication n'existe entre le serveur de test et le SUT, et par conséquent, aucune erreur ni bilan de test n'est produit.

Le module d'exécution et d'interprétation des résultats 23 est une interface homme-machine (IHM) permettant d'exécuter une ETS 35.

L'exécution d'une ETS permet la création de codes de commandes suivant une séquence clairement définie dans les scénarios MSC de la suite de test. Cette séquence de codes de commandes (envois et réponses) est envoyée à l'appareil de télécommunication via la plate-forme d'intégration (modules d'intégration). Cette communication est dite en-ligne ou en flux-tendu 26.

Lors de l'exécution, le module d'exécution et d'interprétation des résultats fournit en temps réel une trace avec une liste des éventuelles erreurs. Les erreurs peuvent être visualisées directement dans le scénario concerné (éditeur MSC 20) par double clic sur un élément de la liste d'erreurs.

Une fois le scénario affiché avec le message en erreur coloré en rouge, on peut, par double clic sur le message, afficher la définition du message avec l'élément incriminé en rouge (éditeur ASN.1 21).

La trace et les erreurs produites sont aussi sauvegardées.

Lors de chaque exécution d'une ETS, le serveur de test produit un bilan du test. Les bilans de test sont gérés par le module de gestion de résultats 24 (ce module est un serveur WEB).

Ce module permet d'analyser de manière spécifique le test (erreurs, trames, configurations, scénarios utilisés, etc), de faire de comparaisons entre bilans, de vérifier l'absence de régressions, de fournir une étude qualité, de garantir le bon fonctionnement de l'appareil de télécommunication grâce aux documents fournis, etc.

Grâce à la technique WEB, les données qualité sont facilement exploitables en dehors du serveur de test.

Les codes générés par le serveur de test peuvent arriver directement à l'appareil de télécommunication testé 2 ou alors transiter via un simulateur 35. Dans le deux cas, le serveur de test considère qu'il s'agit de l'appareil de télécommunication. L'existence ou non du simulateur est transparente car la considération a été faite lors de la création du module d'intégration concerné dans la plate-forme d'intégration.

Il est souvent souhaitable d'exécuter plusieurs fois une ETS durant un temps prédéterminé ou de façon permanente avec des configurations différentes. Le serveur de test permet dans ce cas, à l'aide du module de contrôle de l'exécution 39, la création des simulations. Une simulation consiste à l'exécution d'une ETS sous un contrôle défini, ce control est défini dans les fichiers de configuration de contrôle de l'exécution (CExec) 40, le fichier de configuration de contrôle de l'exécution souhaité est sélectionné avant toute exécution d'un test. Ce contrôle permet de vérifier si le nombre d'exécutions prédéterminé est atteint, si la durée d'exécution est achevée, ou si l'exécution doit être réalisée de façon permanente. Le module de contrôle de l'exécution comprend également des moyens pour exécuter plusieurs ETS de façon simultanée sur un même appareil de télécommunication. Ceci permet de concevoir des tests de charge en associant cette particularité avec la particularité de création des simulations, enfin ce même module permet de définir le niveau de détail des informations dans le bilan de test.

Le serveur de test est constitué de deux parties ; une partie binaire 30 (exécutable produit par compilation de code C++) et une partie interprétée en langage PERL 32. L'API 31 fournie par la partie binaire 30 permet d'intégrer la partie interprétée (PERL) au coeur du serveur et avoir ainsi accès à toutes les données.

L'utilisation d'un langage interprété est un atout majeur car ce type de langage permet de faire des ajustements dans les modules d'intégration mais aussi de protocole sans besoin de compiler le coeur du serveur.

Dit autrement, l'adaptation à n'importe quel type d'appareil de télécommunication, ou des modifications à un protocole, ne nécessite aucune intervention dans l'exécutable du serveur.

Le choix du langage PERL pour la partie interprétée (piles des protocoles, modules d'intégration et production d'un bilan) a été dû à sa puissance de traitement, toutefois, la partie interprétée peut également être écrite, par exemple, en langage JAVA, PYTON ou LISP.

La disponibilité de l'application API 31, permet aussi l'intégration de modules spécifiques 33 (Tests de contrainte, migration de données, analyses de résultat, contrôleurs sémantiques...) au sein du serveur de test.

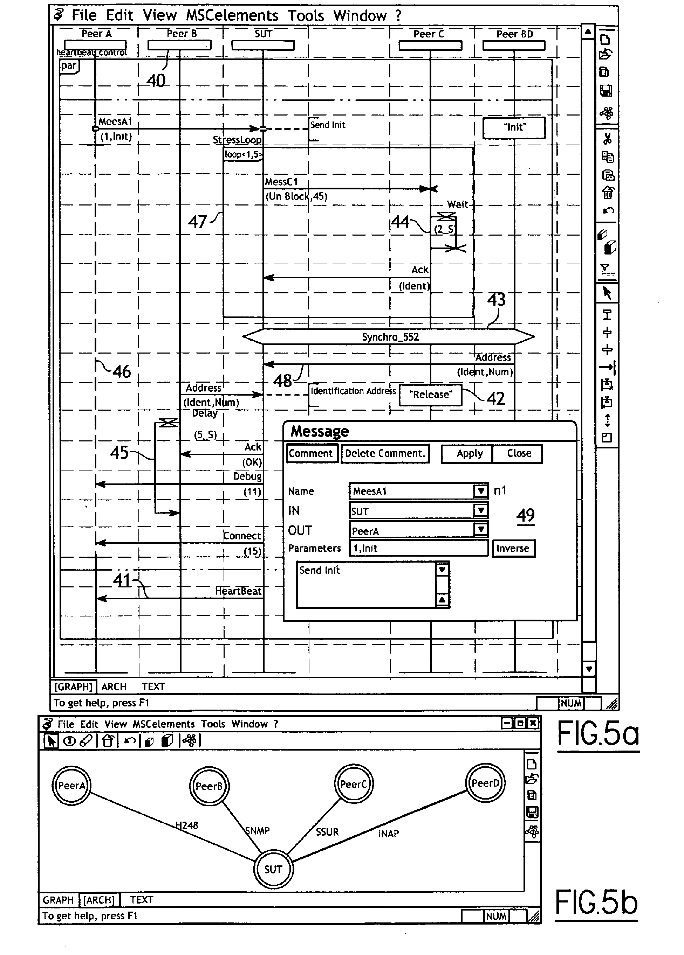

La figure 5 montre l'éditeur graphique structurel qui permet la création de scénarios (ATC) dans un langage de spécification évolué MSC. On peut distinguer, dans la figure 5a, les instances 40 (le SUT est en gras), les messages 41, les actions 42, les points de synchronisation 43, les temporisateurs 44, les expirations 45, les corégions 46, les éléments de décision (parallèle, alternatif et boucle) 47 et les commentaires qui peuvent être associés à tout élément 48. Les éléments MSC permettent ainsi de créer l'automate souhaité pour réaliser un cas de test. La combinaison de plusieurs scénarios avec des configurations différentes permet de créer une suite de test ETS qui sera à son tour exécutée avec comme résultat l'obtention d'un bilan.

L'instantiation des messages est complètement définie avec l'éditeur ASN.1 qui est activé directement de l'éditeur MSC.

Lors de l'édition d'un scénario, les propriétés de chaque élément peuvent être affichées pour modification 49. Dans la figure 5a les propriétés affichées correspondent à l'élément sélectionné, à savoir, le message MessA 1.

L'éditeur MSC présente trois formes externes du même scénario (l'accès se fait à l'aide des onglets à gauche de la partie inférieure de la fenêtre), la graphique 5a, l'architecture 5b et la textuelle (non présentée).

La forme architecture permet de visualiser les protocoles utilisés par les instances du scénario.

Il est important de noter que l'éditeur MSC est un serveur OLE (Object Link Embeded en langue anglaise). Cette particularité permet de réaliser de documents de spécification (Word) avec des scénarios MSC inclus.

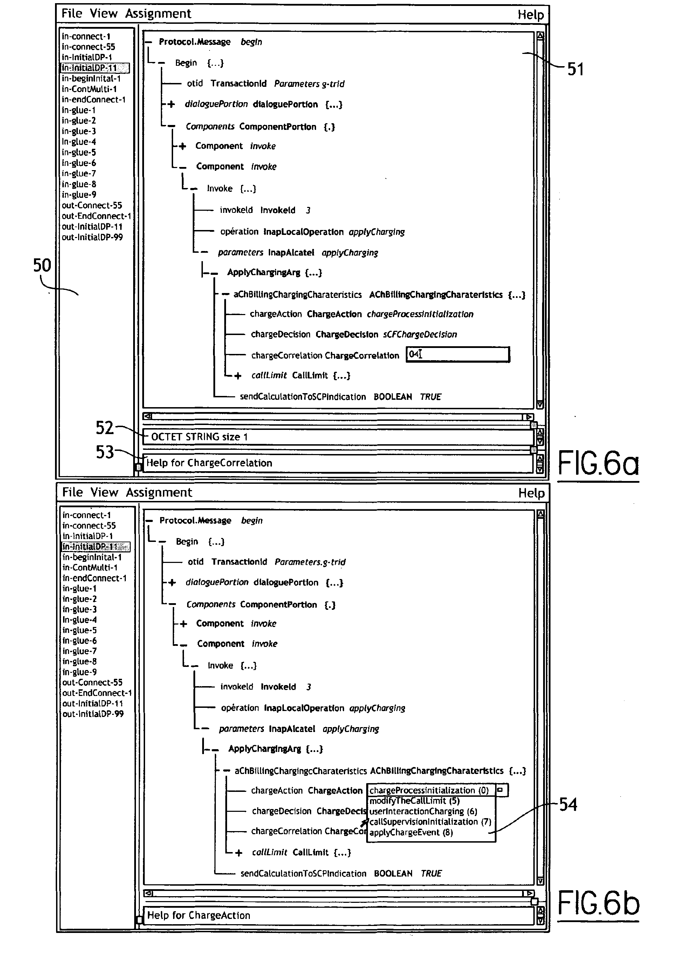

La figure 6 montre l'éditeur ASN.1 et plus particulièrement l'édition d'un message d'un protocole donné. On peut visualiser la liste de messages dans le module 50, le message sélectionné et sa structure 51, les contraintes de l'élément du message sélectionné 52, l'aide en ligne sur l'élément du message sélectionné 53 enfin, la facilité de visualisation dans l'édition d'un message. Les configurations sont éditées suivant la même technique.

Chaque élément édité (message ou configuration) est conçu sous forme d'un arbre (des structures de données qui peuvent être complètement ou partiellement initialisés). L'éditeur ASN.1 permet une interaction correcte et ergonomique de l'utilisateur avec les différentes parties de chaque élément.

La figure 6b présente l'aide fourni à l'utilisateur pour valoriser les structures 54.

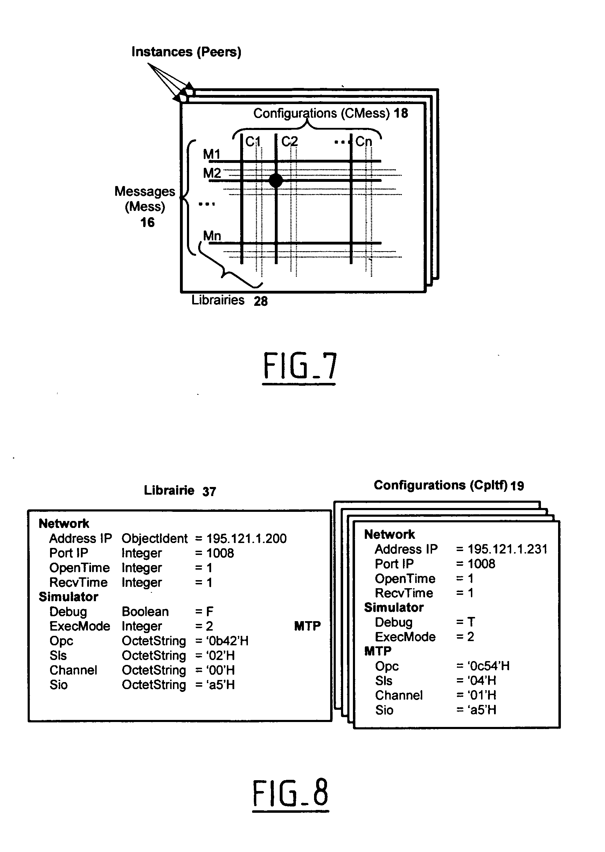

Sur la figure 7 sont représentés les combinaisons possibles de configuration côté protocole avant génération, à savoir : messages 16 et configuration de messages 18. Chaque configuration est réalisée par instance (Peer). Les messages et le fichier de configuration de messages appartiennent toujours à la même librairie 28. La configuration étant par instance, plusieurs protocoles peuvent intervenir dans le test.

Sur la figure 8 est représentée une librairie d'un module d'intégration de la plate-forme d'intégration 13 et des fichiers de configuration correspondants 19. Les fichiers de configuration sont identiques dans leur structure mais les valeurs sont différentes. Parmi l'ensemble 19, l'utilisateur choisit le fichier de configuration souhaité avant l'exécution du test. Cette même approche est utilisée pour tous les fichiers de configuration.

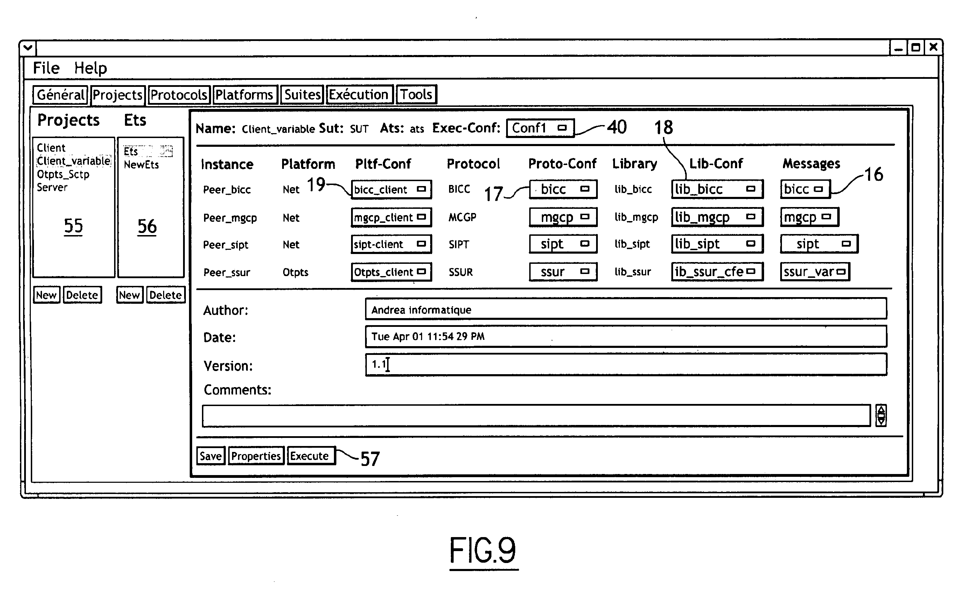

La figure 9 illustre une partie de l'interface graphique du serveur de test. Il s'agit de la configuration d'une ETS avant exécution.

Il est possible de distinguer à gauche, la liste de projets 55, puis la liste d'ETS du projet sélectionné 56. A droite, la configuration de l'ETS sélectionné, à savoir et par instance (Peer): la configuration de la plate-forme 19, la configuration du protocole 17, la configuration de messages 18, et le module de messages 16. La configuration de l'exécution est globale 40, en effet, elle concerne l'exécution du test en général et non une instance en particulier.

Il est à noter dans cet exemple que le module d'intégration (platform), le protocole et la librairie par instance sont définis en amont, c'est-à-dire, à la création du projet. A partir d'un projet, plusieurs ETS peuvent être définies avec des configurations différentes.

Une fois la configuration définie, l'exécution de l'ETS (test) est réalisée à l'aide du bouton « execute » 57.

La présente invention permet une gestion multi protocoles. Le serveur de test permet de simuler l'environnement complet autour de l'appareil de télécommunication en simulant simultanément toutes les interfaces connectées à cet appareil.

Bien sûr, l'invention n'est pas limitée aux exemples qui viennent d'être décrits et de nombreux aménagements peuvent être apportés à ces exemples sans sortir du cadre de l'invention.

## Revendications

1. Serveur de test (1) pour tester un appareil de télécommunication (2), **caractérisé en ce que** ce serveur de test comprend en combinaison :
- une application compilée (30) pour élaborer au moins une suite exécutable de tests (35) à partir de données standard, et
- une application en langage interprété (32) pour transmettre ladite suite exécutable de tests (35) vers l'appareil de télécommunication et recevoir des résultats en provenance de cet appareil de télécommunication, cette application en langage interprété (32) étant configurable avec des données spécifiques dudit appareil de télécommunication de façon à adapter le serveur de test au mode de communication spécifique dudit appareil de télécommunication.

2. Serveur de test selon la revendication 1, **caractérisé en ce que** l'application compilée (30) comprend un éditeur structurel graphique (20) permettant à un utilisateur d'élaborer des scénarios de test (14).

3. Serveur de test selon la revendication 2, **caractérisé en ce que** l'éditeur structurel graphique (20) est un éditeur au format MSC ("Message Sequence Chart").

4. Serveur de test selon la revendication 2 ou 3, **caractérisé en ce que** l'éditeur structurel graphique (20) est associé à un éditeur graphique (21) au format ASN.1 ("Abstract Syntax Notation One"), ce dernier ayant pour fonction de générer des fichiers constitutifs de ladite suite exécutable de tests (35) à partir de données provenant de l'éditeur structurel graphique (20) et de données relatives à des protocoles standards définis dans une plateforme de test (12).

5. Serveur de test selon la revendication 4, **caractérisé en ce que** des informations, appelées "NOTES", permettent d'associer des informations de type PICS et PIXIT mais aussi tout type d'information complémentaire pour mieux définir ce qu'on souhaite générer ou tester.

6. Serveur de test selon la revendication 4 ou 5, **caractérisé en ce que** la plate-forme de tests (12) est constituée d'une pluralité de modules de protocoles, chaque module de protocole comprenant au moins un protocole (27) décrit sous le format ASN.1, une librairie (28) et une première pile d'encodage et décodage (29) pour produire des codes compréhensibles par l'appareil de télécommunication.

7. Serveur de test selon l'une quelconque des revendications précédentes, **caractérisé en ce que** l'application en langage interprété (32) comprend une plate-forme d'intégration (13) constituée d'une pluralité de modules d'intégration, chaque module d'intégration comprenant au moins une procédure d'initialisation (36) , une librairie (37) et une seconde pile d'encodage et décodage (38) pour produire des codes spécifiques au mode de communication dudit appareil de télécommunication (2).

8. Serveur de test selon les revendications 6 et 7, **caractérisé en ce que** les piles d'encodage et décodage (29, 38) sont définies en langage interprété.

9. Serveur de test selon la revendication 7 ou 8, **caractérisé en ce que** l'application en langage interprété (32) comprend un module d'exécution et d'interprétation de résultats (23) apte à :
- recevoir les fichiers constitutifs de la dite suite exécutable de test (35),
- gérer ladite suite exécutable de tests en utilisant ladite première pile d'encodage et décodage (29), et
- transmettre en temps réel ladite suite exécutable de tests vers l'appareil de télécommunication via la plate-forme d'intégration (13).

10. Serveur de test selon la revendication 9, **caractérisé en ce que** le module d'exécution et d'interprétation de résultats (23) comprend des moyens pour recevoir en temps réel lors d'une exécution de test des résultats provenant de l'appareil de télécommunication via la plate-forme d'intégration (13), et générer des messages d'erreurs qui peuvent être visualisées dans les fiches de l'éditeur structurel graphique (20).

11. Serveur de test selon la revendication 9 ou 10, **caractérisé en ce que** l'application en langage interprété (32) comprend un module de contrôle de l'exécution (39) apte à interpréter en temps réel des informations sur le déroulement de test, ces informations étant créées et éditées à l'aide de l'éditeur ASN.1.

12. Serveur de test selon la revendication 8, **caractérisé en ce que** le module d'exécution et d'interprétation de résultats (23) comprend des moyens pour générer un fichier (34) de suite exécutable de test hors ligne.

13. Serveur de test selon l'une quelconque des revendications précédentes, **caractérisé en ce que** l'application en langage interprété (32) comprend un serveur Web (24) pour la gestion des résultats issus de tests.

14. Serveur de test selon l'une quelconque des revendications précédentes, **caractérisé en ce que** la suite exécutable de tests comprend un fichier (15) de test de type ATS ("abstract test suite", en langue anglaise) élaboré depuis un éditeur graphique arborescent de projets et de suites de test (22).

15. Serveur de test selon l'une quelconque des revendications précédentes, **caractérisé en ce que** la suite exécutable de tests comprend au moins un fichier d'édition de message (16), un fichier de configuration de protocole (17) et un fichier de configuration de messages (18).

16. Serveur de test selon la revendication 7 et la revendication 14 ou 15, **caractérisé en ce que** la suite exécutable de tests comprend en outre un fichier (19) pour configurer, lors de l'exécution de tests, la plateforme d'intégration, ce fichier étant édité par l'éditeur ASN.1 à partir de données préalablement obtenues depuis la plate-forme d'intégration.

17. Serveur de test selon la revendication 10 et l'une quelconque des revendications 14 à 16, **caractérisé en ce que** la suite exécutable de tests comprend en outre un fichier (40) pour configurer, lors de l'exécution de tests, le module d'exécution, ce fichier étant édité par l'éditeur ASN.1 à partir de données préalablement obtenues depuis le module de contrôle de l'exécution (39).

18. Serveur de test selon l'une quelconque des revendications précédentes, **caractérisé en ce que** le langage interprété est un langage de type PERL ("Practical Extraction and Reporting Language").

19. Serveur de test selon l'une quelconque des revendications précédentes, **caractérisé en ce qu'**il comprend une application (31) de type API (interface de programme d'application) faisant le lien entre l'application compilée (30) et l'application en langage interprété (32).

20. Procédé pour tester un appareil de télécommunication au moyen d'un serveur de test, **caractérisé en ce qu'**on élabore une suite exécutable de tests au moyen d'une application compilée, on adapte la suite exécutable de tests au mode de communication dudit appareil de télécommunication au moyen d'une application en langage interprété en combinaison avec ladite application compilée au sein du serveur de test.

21. Procédé selon la revendication 20, **caractérisé en ce que** l'application compilée met en oeuvre un éditeur de type MSC associé à un éditeur de type ASN.1

22. Procédé selon la revendication 21, **caractérisé en ce que** pour l'élaboration de la suite exécutable de test, les éditeurs MSC et ASN.1 utilisent des protocoles préalablement décrits dans le serveur sous le format ASN.1.

23. Procédé selon la revendication 22, **caractérisé en ce que** lors de la définition des protocoles, on réalise des piles d'encodage et décodage en langage interprété

24. Procédé selon l'une quelconque des revendications 21 à 23, **caractérisé en ce que** lors de l'exécution de tests, les erreurs sont visualisées en temps réel dans une fiche de l'éditeur MSC.

25. Procédé selon la revendication 24, **caractérisé en ce qu'**avec l'éditeur ASN.1, on détermine à quels éléments les erreurs sont associées.

26. Procédé selon l'une quelconque des revendications 20 à 25, **caractérisé en ce qu'**on réalise des simulations en charge au moyen d'un module de contrôle de l'exécution.
